Europäisches Patentamt

European Patent Office

Office européen des brevets

(11) Numéro de publication: **0 296 069 B1**

(12) **FASCICULE DE BREVET EUROPEEN**

(45) Date de publication de fascicule du brevet: **19.11.92**  (51) Int. Cl.⁵: **B23D 37/00**

(21) Numéro de dépôt: **88401521.5**

(22) Date de dépôt: **17.06.88**

---

(54) **Machine à brocher.**

---

(30) Priorité: **19.06.87 FR 8708671**

(43) Date de publication de la demande:
**21.12.88 Bulletin 88/51**

(45) Mention de la délivrance du brevet:
**19.11.92 Bulletin 92/47**

(84) Etats contractants désignés:
**DE ES GB IT**

(56) Documents cités:
**US-A- 1 532 107**
**US-A- 1 823 975**

(73) Titulaire: **REGIE NATIONALE DES USINES RE-NAULT**
**Boîte postale 103 8-10 avenue Emile Zola**
**F-92109 Boulogne-Billancourt(FR)**

(72) Inventeur: **Prat, Serge**
**10, Allée des Granges**
**F-91360 Villemoisson Sur Orge(FR)**

(74) Mandataire: **Saint Martin, René et al**
**Régie Nationale des Usines Renault 8 & 10,**
**avenue Emile Zola**
**F-92109 Boulogne Billancourt(FR)**

Rank Xerox (UK) Business Services

# Description

La présente invention se rapporte à une machine à brocher comprenant un bâti sur lequel sont guidés en translation deux coulisseaux de guidage et entraînement de la broche déplacés en translation par des organes moteurs.

La publication US-A-1532107 décrit une machine dans laquelle un premier coulisseau actionné par des vérins moteurs, pousse l'outil au travers de la pièce à usiner. L'outil est alors saisi par un cadre de traction commandé par des vérins auxiliaires. L'invention a pour objet de supprimer les risques d'une détérioration prématurée de l'outil par suite des efforts de poussée exercés par le coulisseau et des percussions résultant de la transmission des efforts de brochage au coulisseau.

La caractéristique de la revendication apporte une solution au problème précité.

La machine à brocher ainsi réalisée fonctionne indifféremment par poussée ou par traction des outils sans aucune modification du système de puissance d'entraînement et sans modification du cycle de fonctionnement de la machine. Les outils sont parfaitement guidés sans contraintes et subissent uniquement les efforts inhérents au mode de travail, c'est-à-dire le flambage pour l'utilisation en brocheuse de poussée et la traction pour l'utilisation en brocheuse de traction. Au cours de la remontée (ou du retour) des outils après la phase de travail, les broches ne sont pas des éléments d'entraînement entre les deux coulisseaux. La contrainte pouvant entraîner la déformation ou la casse de la broche est évitée. La machine conforme à l'invention donne la possibilité de choisir le mode de travail et améliore la qualité géométrique des pièces réalisées et la durée de vie de l'outil.

Selon une autre caractéristique, la machine comporte un organe de liaison à serrage susceptible d'assurer la liaison du cadre et de la table de travail du bâti.

Selon une caractéristique préférentielle, la machine comporte un dispositif annexe de déplacement d'un coulisseau du cadre.

L'invention va maintenant être décrite avec plus de détails en se référant à un mode de réalisation donné à titre d'exemple et représenté par les dessins annexés, sur lesquels :

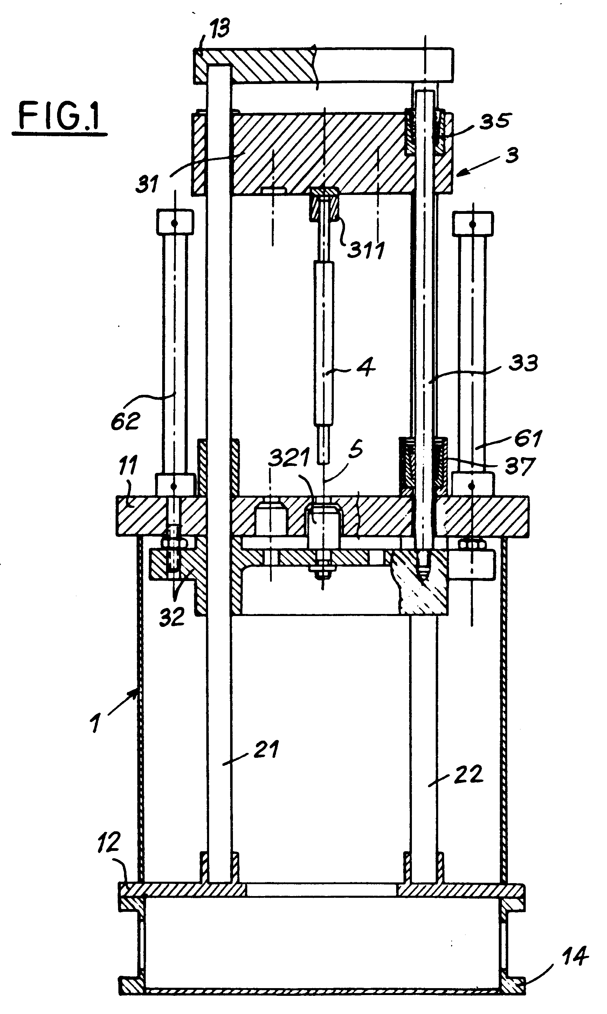

- la figure 1 est une coupe verticale de la machine selon l'invention,

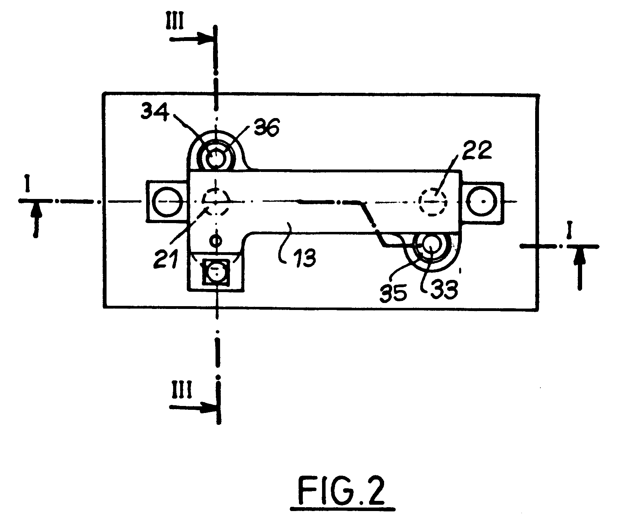

- la figure 2 est une vue de dessus de la figure 1,

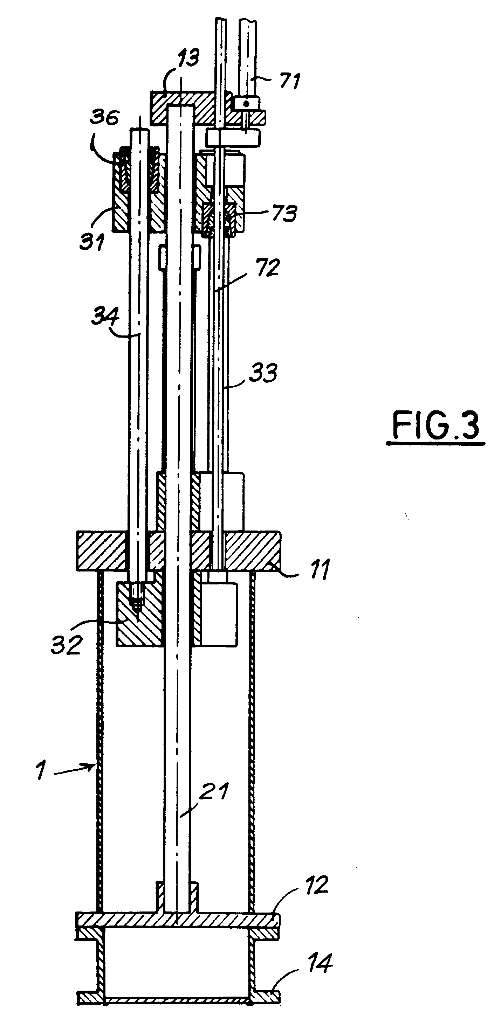

- la figure 3 est une coupe selon III-III de la figure 2.

La machine illustrée sur les dessins comprend un bâti 1 comprenant une table de travail 11 sur laquelle se fixe les montages de prise de la pièce à brocher. Le bâti repose sur un socle inférieur 14 se fixant au sol.

Le bâti est solidaire de colonnes de guidage cylindriques 21 et 22 qui par leurs extrémités inférieures sont réunies par l'embase 12 et à leurs extrémités supérieures sont réunies par une traverse supérieure 13. Ces deux colonnes passent dans des alésages de la table de travail 11.

La machine comprend un cadre mobile 3 composé d'un coulisseau supérieur 31 situé au-dessus de la table 11 et d'un coulisseau inférieur 32 situé au-dessous de la table. Ces coulisseaux sont réunis l'un à l'autre par une liaison permettant un réglage de l'écartement relatif des coulisseaux en fonction de la longueur des outils de brochage. Le cadre mobile 3 est guidé en translation par les colonnes 21 et 22.

La liaison entre les coulisseaux est assurée par deux colonnes d'entretoisement cylindriques 33 et 34 solidaires de l'un des coulisseaux 32 et coulissant dans des portées de l'autre coulisseau 31, lequel porte des accouplements déverrouillables 35 et 36 dans lesquels passent les colonnes 33 et 34. Ces accouplements fonctionnant par serrage assurent le verrouillage et la liaison en translation respectivement des colonnes 33 et 34 avec le coulisseau 31 réglable. Le cadre 3 peut être solidarisé du bâti par un accouplement déverrouillable 37 traversé par la colonne 33 pour assurer la sécurité du maintien du cadre en position lors d'un arrêt. Le réglage du cadre en fonction de la longueur peut facilement s'automatiser pour diminuer le temps d'arrêt de la machine à chaque changement de rafale.

Dans le mode de réalisation représenté, les colonnes d'entretoisement 33 et 34 sont solidaires du coulisseau inférieur 342, le coulisseau supérieur 31 portant les accouplements 35 et 36.

Les coulisseaux 31 et 32 sont munis d'organes d'accrochage pour une ou plusieurs broches.

Le coulisseau supérieur 31 est muni d'au moins un organe d'accrochage 311 de l'extrémité supérieure d'une broche 4. Le coulisseau inférieur 32 est muni d'au moins un organe d'accrochage 321 de l'extrémité inférieure d'une broche 4. Chaque broche est déplacée selon un axe de brochage repéré 5.

Le déplacement du cadre 3 est assuré par deux vérins 61 et 62 dont les cylindres sont fixés à la table 11 et dont les tiges sont accouplées au coulisseau inférieur 32.

En variante, les vérins 61 et 62 pouraient être remplacés par des vis à billes, des vis hydrostatiques ou des entrainements pignons-crémaillères commandés par moteur électrique ou hydraulique.

La machine comporte un dispositif annexe de déplacement du coulisseau supérieur 31. Il est constitué par un vérin 71 relié à une tige verticale 72 guidée en translation dans le bâti 1 et susceptible d'être solidarisée en translation avec le coulisseau par l'intermédiaire d'un organe d'accouplement verrouillable 73 fonctionnant par serrage. Cette tige 72 est guidée en translation dans des paliers de la table 11 et de la traverse supérieure 13.

Le fonctionnement du dispositif va maintenant être décrit.

Pour dégager la broche et évacuer la pièce brochée et pour introduire la pièce à usiner sous la broche, le cadre 3 est désolidarisé. A cet effet, les accouplements 35 et 36 sont ouverts.

Avant brochage l'accouplement 73 est serré sur la tige 72. Le coulisseau 31 est soulevé par le vérin 71 afin de permettre l'introduction des pièces sous la broche puis redescendu afin d'introduire la broche dans la pièce à brocher. Les accouplements 35 et 36 sont serrés et l'accouplement 73 est dessérré.

Le cadre 3 ainsi solidarisé est déplacé pendant l'opération de brochage par les vérins 61 et 62.

A la fin du brochage, les accouplements 35 et 36 sont ouverts et l'accouplement 73 est serré sur la tige 72 de manière à solidariser en translation le coulisseau 31 et ladite tige. Les vérins 61 et 62 par un supplément de course entraînent le coulisseau 32 afin de permettre de dégager les outils et permettre ainsi l'évacuation des pièces brochées.

Les coulisseaux sont ensuite rapprochés et le cadre est à nouveau solidarisé afin de permettre le retour des outils de brochage à leur position d'origine.

En cas de coupure volontaire ou accidentelle de l'énergie de travail, tous les accouplements 35, 36, 37 et 73 se serrent, assurant ainsi mécaniquement le maintien de toutes les masses verticales mobiles suspendues de la brocheuse.

Il est bien entendu que l'on peut, sans sortir du cadre de l'invention, imaginer des variantes et des perfectionnements de détails et, de même, envisager l'emploi de moyens équivalents.

Ainsi la machine pourrait être une brocheuse de traction uniquement ou une brocheuse de poussée uniquement. Les colonnes pourraient être fixées au coulisseau supérieur, le coulisseau inférieur portant les accouplements.

**Revendications**

1. Machine à brocher comprenant un bâti (1) sur lequel sont guidés en translation un premier et un deuxième coulisseau (31, 32) de guidage et d'entraînement de la broche qui sont déplacés en translation par des organes moteurs (61, 62), caractérisée par le fait que le premier et le deuxième coulisseau (31, 32) font partie d'un cadre mobile (3) formé par des colonnes (33, 34) reliées au premier coulisseau (32) et des moyens de liaison (35, 36) permettant le réglage de l'écartement des coulisseaux dans le but de déplacer l'ensemble du cadre et de guider les deux extrémités de la broche en poussant ou tirant cette dernière pendant le travail de la machine.

2. Machine selon la revendication 1, caractérisée par le fait que les colonnes (33, 34) reliées au premier coulisseau (32) coulissent dans le second coulisseau (31) portant des organes de liaison (35, 36) susceptibles d'assurer par serrage la liaison dudit second coulisseau (31) et desdites colonnes.

3. Machine selon la revendication 2, caractérisée par le fait que le premier coulisseau (32) est le coulisseau inférieur.

4. Machine selon l'une quelconque des revendications précédentes, caractérisée par le fait qu'elle comporte un organe de liaison à serrage (37) susceptible d'assurer la liaison du cadre (3) et de la table de travail (11) du bâti.

5. Machine selon l'une quelconque des revendications précédentes, caractérisée par le fait qu'elle comporte un dispositif annexe (71, 72, 73) de déplacement d'un coulisseau (31) du cadre.

6. Machine selon la revendication 5, caractérisée par le fait que le dispositif annexe de déplacement se compose d'une tige mobile (72) guidée dans le bâti et susceptible d'être accouplée en translation au cadre par l'intermédiaire d'un organe de liaison à serrage (73), cette tige (72) étant déplacée par un moyen moteur (71).

7. Machine selon l'une quelconque des revendications précédentes, caractérisée par le fait que le bâti (1) comprend deux colonnes verticales (21, 22) servant à guider le cadre mobile (3).

**Claims**

1. A broaching machine comprising a stand (1) on which there are guided in translation a first and a second slide (31, 32) guiding and driving the broach which are moved in translation by motor means (61, 62), characterized in that the first and the second slide (31, 32) form part of a moving frame (3) formed by columns (33, 34) connected to the first slide (32) and connection means (35, 36) allowing an adjustment of the spacing of the slides so as to move the frame assembly and guide the two ends of the broach by pushing or pulling the latter during operation of the machine.

2. A machine as claimed in claim 1, characterized in that the columns (33, 34) connected to the first slide (32) slide in the second slide (31) bearing connection member (35, 36) adapted to provide, by clamping, a connection between the second slide (31) and these columns.

3. A machine as claimed in claim 2, characterized in that the first slide (32) is the lower slide.

4. A machine as claimed in any one of the preceding claims, characterized in that it comprises a clamp connection member (37) adapted to provide a connection between the frame (3) and the operating table (11) of the stand.

5. A machine as claimed in any one of the preceding claims, characterized in that it comprises an auxiliary device (71, 72, 73) for the displacement of a slide (31) of the frame.

6. A machine as claimed in claim 5, characterized in that the auxiliary displacement device is formed by a moving rod (72) guided in the stand and adapted to be coupled in translation to the frame via a clamp connection member (73), this rod (72) being moved by a motor means (71).

7. A machine as claimed in any one of the preceding claims, characterized in that the stand (1) comprises two vertical columns (21, 22) adapted to guide the moving frame (3).

**Patentansprüche**

1. Räummaschine, mit einem Gestell (1), an dem verschiebbar ein erster und ein zweiter Gleiter (31, 32) zur Führung und zum Antrieb der Räumnadel geführt sind, die durch Motoranordnungen (61, 62) verschoben werden, **dadurch gekennzeichnet,** daß der erste und der zweite Gleiter (31, 32) Teil eines beweglichen Rahmens (3) sind, der durch Säulen (33, 34) gebildet wird, die mit dem ersten Gleiter (32) und einer Verbindungsanordnung (35, 36) verbunden sind, um so eine Einstellung des Abstandes der Gleiter voneinander zu ermöglichen, im Hinblick auf eine Verschiebung des gesamten Rahmens und eine Führung der beiden Enden der Räumnadel, indem diese während des Einsatzes der Maschine gestoßen oder gezogen wird.

2. Maschine nach Anspruch 1, **dadurch gekenn-** **zeichnet,** daß die mit dem ersten Gleiter (32) verbundenen Säulen (33, 34) im zweiten Gleiter (31) gleiten und die Verbindungsanordnung (35, 36) tragen, welche eine Klemmverbindung des zweiten Gleiters (31) mit den Säulen herstellen kann.

3. Maschine nach Anspruch 2, **dadurch gekennzeichnet,** daß der erste Gleiter (32) der untere Gleiter ist.

4. Maschine nach einem der vorhergehenden Ansprüche**, dadurch gekennzeichnet,** daß sie einen Klemm-Verbindungsteil (37) aufweist zur Herstellung einer Verbindung zwischen dem Rahmen (3) und dem Arbeitstisch (11) des Gestells.

5. Maschine nach einem der vorhergehenden Ansprüche, **dadurch gekennzeichnet,** daß sie eine zusätzliche Anordnung (71, 72, 73) zur Verschiebung eines Gleiters (31) des Rahmens aufweist.

6. Maschine nach Anspruch 5, **dadurch gekennzeichnet,** daß die zusätzliche Verschiebeanordnung sich aus einer beweglichen Kolbenstange (72) zusammensetzt, welche im Gestell geführt wird und die schiebebeweglich mit dem Rahmen über ein Klemmverbindungsteil (73) verbunden werden kann, wobei die Kolbenstange (72) durch eine Motoranordnung (71) betätigbar ist.

7. Maschine nach einem der vorhergehenden Ansprüche, **dadurch gekennzeichnet,** daß das Gestell (1) zwei senkrechte Säulen (21, 22) zur Führung des beweglichen Rahmens (3) aufweist.

FIG.1

FIG.2

FIG.3